# EUROPEAN PATENT APPLICATION

(11) **EP 4 852 188 A1**
(43) Date of publication of application: **09.12.2026**
(21) Application number: 24921220.0
(22) Date of filing: 15.05.2024
(51) Int. Cl.: H01M 50/342, H01M 50/15, H01M 50/593

(54) **BLADE BATTERY, BATTERY MODULE, AND BATTERY PACK**

(30) Priority: 04.02.2024 CN 202410154782
(71) Applicant: SVOLT Energy Technology Co., Ltd., Changzhou, Jiangsu 213200 (CN)
(72) Inventor: LI, Jincheng, hangzhou, Jiangsu 213200 (CN); LI, Jian, hangzhou, Jiangsu 213200 (CN); SHENG, Jie, hangzhou, Jiangsu 213200 (CN); LIU, Jie, hangzhou, Jiangsu 213200 (CN); XIN, Xueqian, hangzhou, Jiangsu 213200 (CN); ZHOU, Jie, hangzhou, Jiangsu 213200 (CN)
(74) Representative: Michalski Hüttermann & Partner mbB
(86) International application number: PCT/CN2024/093473
(87) International publication number: WO 2025/161177

(57) **Abstract**

The present application relates to the field of batteries, in particular to a blade battery, a battery module, and a battery pack. The blade battery includes a housing, an electrode assembly, a cover plate, an insulation support structure, and a stopper. During thermal runaway, the stopper supports between the cover plate, and satisfying: 8% ≤ S1/S3 ≤ 30%, 10% ≤ S2/S4 ≤ 80%. There is a gap between the insulation support structure and an inner wall of the housing, to facilitate housing insertion of the insulation support structure. At the same time, the gap between the insulation support structure and the inner wall of the housing serves as an airflow channel under normal operation of the battery to ensure that gas can flow through the gap area to the pressure relief mechanism. S1/S3 ≤ 30% is set to prevent the width of the insulation support structure from being too small to ensure insulation protection effect of the insulation support structure on the electrode assembly. 10% ≤ S2/S4 ≤ 80% is set to prevent exhaust channels from being too small due to S2 being too small, and to effectively ensure the exhaust effect in the event of thermal runaway of the battery. At the same time, a size of the stopper is prevented from being too small due to S2 being too large to ensure strength of the stopper.

## Description

### CROSS-REFERENCE TO RELATED APPLICATIONS

The present application claims priority to Chinese patent application No. 202410154782.8 filed with China National Intellectual Property Administration on February 4, 2024, entitled "Blade Battery, Battery Module and Battery Pack", the entire content of which is hereby incorporated by reference.

### FIELD

The present application relates to the field of batteries, in particular to a blade battery, a battery module, and a battery pack.

### BACKGROUND

A housing of a blade battery has openings at both sides, an electrode assembly is disposed inside the housing, a cover plate is disposed at the openings on both sides of the housing, the cover plate is provided with explosion-proof valves, and insulation support structures such as a lower plastic and an end plate are disposed between the cover plate and the electrode assembly. When thermal runaway occurs in the battery, a large amount of heat and gas is generated inside the battery in a very short time. The explosion-proof valves cannot release the gas in time, leading to an increase in pressure inside the housing. However, gas continues to be exhausted from a side with the explosion-proof valves, causing pressure at the explosion-proof valves to be decreased, and pressure at a side without the explosion-proof valves to be high. This pressure difference generates a force towards the side with the explosion-proof valves for pushing the electrode assembly towards the bottom side with the explosion-proof valves. A melting point of the lower plastic and the end plate made of plastic is generally between 160°C and 170°C. When thermal runaway occurs in a battery cell, a temperature inside the battery cell can reach 400°C and the lower plastic and end plate lose their function of supporting the electrode assembly after being melted. Under the action of pressure difference, the electrode assembly moves towards the cover plate at the side with the explosion-proof valves to reduce a venting space at the explosion-proof valves or even block the explosion-proof valves. This prevents the heat and gas generated inside the housing from discharging in time, a large amount of hot gas accumulates inside the housing to increase gas pressure inside the housing, and prevents leading to housing tearing, firing, or even battery explosion. In the battery module or the battery pack, heat inside the housing of the battery where thermal runaway occurs can be transferred to other batteries, causing adjacent or nearby batteries to trigger thermal runaway, resulting in serious safety problems.

### BRIEF SUMMARY

According to the present application, there is provided a blade battery, a battery module, and a battery pack to solve a problem in the related art of shielding or blocking a pressure relief mechanism on a cover plate since an electrode assembly of the blade battery easily moves during thermal runaway of the battery.

In a first aspect, according to the present application, there is provided a blade battery, including:
a housing having an opening on at least one side;
an electrode assembly disposed inside the housing;
a cover plate disposed at the opening on at least one side of the housing, where a pressure relief mechanism is provided at the cover plate on a side;
an insulation support structure disposed between the electrode assembly and the cover plate, where the insulation support structure includes a lower insulator; and
a stopper made of a high temperature resistant material; where the stopper is disposed between the cover plate with the pressure relief mechanism and the electrode assembly; when thermal runaway occurs in the blade battery and after the insulation support structure melts, two sides of the stopper facing the electrode assembly and the cover plate are configured to abut and support the electrode assembly and the cover plate, respectively; a width of the insulation support structure is denoted by W, a width of the electrode assembly is denoted by D; a cross-sectional area of a gap region enclosed by the insulation support structure, an inner wall of the housing, the cover plate, and the electrode assembly parallel to a bottom surface of the housing before the insulation support structure melts is denoted by S1; a cross-sectional area of a gap region enclosed by the stopper, the inner wall of the housing, the cover plate, and the electrode assembly parallel to the bottom surface of the housing after the insulation support structure melts is denoted by S2; cross-sectional areas of a region enclosed by the electrode assembly, the inner wall of the housing and the cover plate parallel to the bottom surface of the housing before and after the insulation support structure melts are denoted by S3 and S4, respectively; where S1, S2, S3 and S4 satisfy: 8% ≤ S1/S3 ≤ 30%, and 10% ≤ S2/S4 ≤ 80%.

Beneficial effects: When thermal runaway occurs in the blade battery with this structure, the stopper can still support between the cover plate and the electrode assembly to prevent the electrode assembly from moving towards the cover plate and shielding or even blocking the pressure relief mechanism to ensure normal exhaust and pressure relief of the pressure relief mechanism. When a distance between an inner surface of the cover plate and the electrode assembly and a size of the housing are fixed, S3 is a fixed value, and S1 and S3 satisfy 8% ≤ S1/S3, S1 is not too small, and there is a gap between the insulation support structure and the inner wall of the housing, to facilitate housing insertion of the insulation support structure. At the same time, the gap between the insulation support structure and the inner wall of the housing serves as an airflow channel under normal operation of the battery to ensure that gas can flow through the gap area to the pressure relief mechanism. However, when the size of the housing and S3 are fixed and S1 is too large, the distance between the insulation support structure and the inner wall of the housing is too large, and a width of the insulation support structure is too narrow and thus it is unable to provide effectively internal insulation protection for the electrode assembly. The electrode assembly is damaged easily when being inserted into the housing. Therefore, S1/S3 ≤ 30% is set to prevent the width of the insulation support structure from being too small to ensure insulation protection effect of the insulation support structure on the electrode assembly. S2 and S4 satisfy 10% ≤ S2/S4 ≤ 80% to prevent exhaust channels from being too small due to S2 being too small, and to effectively ensure the exhaust effect in the event of thermal runaway of the battery. At the same time, a size of the stopper is prevented from being too small due to S2 being too large to ensure strength of the stopper and thus ensure that the stopper can remain stably between the cover plate and the electrode assembly when being squeezed by the electrode assembly.

In an alternative embodiment, a width of the stopper extending in a width direction of the electrode assembly is denoted by F, satisfying 50%×D ≤ F ≤ 95%×W, and/or F ≥ 5mm.

In an alternative embodiment, a length of the stopper extending in a height direction of the electrode assembly is denoted by E, satisfying E ≥ 50%×D and/or E ≥ 5mm.

In an alternative embodiment, the insulation support structure further includes an end plate, the lower insulator is disposed at an inner sidewall of the cover plate, and the end plate is disposed between the lower insulator and the electrode assembly; a width of the lower insulator is denoted by B, a width of the end plate is denoted by C, satisfying 50%×D ≤ F ≤ 95%×B, and/or 50%×D ≤ F ≤ 95%×C.

Beneficial effects: this setting prevents the size of the stopper from being too small; also prevents the stopper from protruding from the lower insulator or the end plate, prevents occurrence of interference during housing insertion, and ensures assembly efficiency.

In an alternative embodiment, a width between inner walls of two large side surfaces of the housing is denoted by A, satisfying 80%×D ≤ W ≤ 95%×A.

Beneficial effects: the lower insulator or end plate has sufficient width to provide good insulation protection for the electrode assembly, while the lower insulator or end plate is prevented from inconvenient housing insertion due to being too wide.

In an alternative embodiment, the insulation support structure is provided with a first groove, and the stopper is disposed inside the first groove.

Beneficial effects: The stopper can be easily and quickly fixed on the insulation support structure. After thermal runaway occurs in the battery and the insulation support structure melts, the stopper is located between the cover plate and the electrode assembly, the electrode assembly moves to push the stopper and thus the two sides of the stopper abut against the cover plate and the electrode assembly, respectively.

In an alternative embodiment, a side of the cover plate facing the stopper is provided with an embedded portion and a fitted portion respectively. After the insulation support structure melts, the fitted portion is fitted into the embedded portion to prevent the stopper from moving arbitrarily.

Beneficial effects: After the lower insulator and the end plate melt, the fitted portion is fitted into the embedded portion to prevent the stopper from moving arbitrarily, the stopper stably supports between the cover plate and the electrode assembly to ensure the smoothness of the exhaust channels, ensure the continuous and effective exhaust and pressure relief of the pressure relief mechanism and improve safety performance of the battery.

In an alternative embodiment, the stopper is in a shape of a rectangular block, and /or the stopper is disposed at a middle position of the width direction of the electrode assembly.

Beneficial effects: Widths of the stopper on both sides facing the cover plate and the electrode assembly are equal. When the stopper and the pressure relief mechanism are misaligned, abutting surfaces between the stopper and the cover plate and the electrode assembly are equal in size to stably maintain and support the stopper between the cover plate and the electrode assembly, preventing instability due to contact surface between the stopper and the cover plate or the electrode assembly being too small, and at the same time preventing the stopper from being crushed due to a contact surface on one side being too small.

Before and after the lower insulator and end plate melt, the exhaust channels are located on both sides of the stopper in the width direction to ensure uniform and effective exhaust.

In a second aspect, according to the present application, there is further provided a battery module, including any of the blade batteries described above. The battery module has the same effects as the blade battery since the battery module includes the blade battery and effects of the battery module are not described in detail herein.

In a third aspect, according to the present application, there is provided a battery pack, including the battery modules described above. The battery pack has the same effects as the battery module since the battery pack includes the battery module and effects of the battery pack are not described in detail herein.

### BRIEF DESCRIPTION OF THE DRAWINGS

In order to more clearly illustrate solutions disclosed in the embodiments of the present application or the related art, the drawings used in the descriptions of the embodiments or the related art are briefly described below. The drawings in the following description are only certain embodiments of the present application, and other drawings can be obtained according to the drawings without any creative work for those skilled in the art.
FIG. 1 is a front view of a blade battery according to an embodiment of the present application;
FIG. 2 is a sectional view along A-A direction of FIG. 1;
FIG. 3 is a front view of a housing of a blade battery according to an embodiment of the present application;
FIG. 4 is a front view of a lower insulator of a blade battery according to an embodiment of the present application;
FIG. 5 is a front view of an end plate of a blade battery according to an embodiment of the present application;
FIG. 6 is a front view of an electrode assembly of a blade battery according to an embodiment of the present application;
FIG. 7 is a cross-sectional view where a lower insulator and an end plate are fitted into a housing and a cover plate before an insulation support structure melts;
FIG. 8 is a cross-sectional view where a lower insulator is fitted into a housing and a cover plate before an insulation support structure melts;
FIG. 9 is a schematic diagram of a stopper;
FIG. 10 is a schematic diagram of a cross-sectional area S1 when an end plate is disposed;
FIG. 11 is a schematic diagram of a cross-sectional area S1 when no end plate is disposed;
FIG. 12 is a schematic diagram of a cross-sectional area S2;
FIG. 13 is a schematic diagram of a cross-sectional area S3; and
FIG. 14 is a schematic diagram of a cross-sectional area S4.

Description of reference signs:
1, housing; 101, bottom surface; 2, electrode assembly; 3, cover plate; 301, second groove; 4, pressure relief mechanism; 5, lower insulator; 501, first groove; 502, boss; 6, stopper; 601, protrusion portion; 7, end plate.

### DETAILED DESCRIPTION

In order to make the object, solutions and advantages of embodiments of the present application more clearly, the solutions in the embodiments of the present application are clearly and completely described in the following with reference to the accompanying drawings in the embodiments of the present application. These embodiments are a part of the embodiments of the present application, and not all of the embodiments. All other embodiments obtained by those skilled in the art based on the embodiments of the present application without any creative work belong to the scope of protection of the present application.

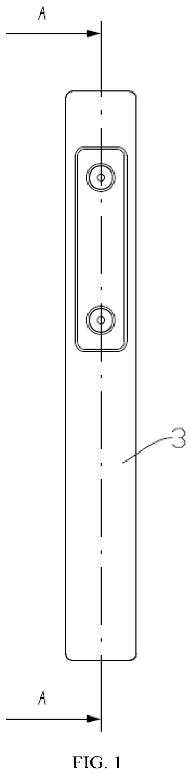

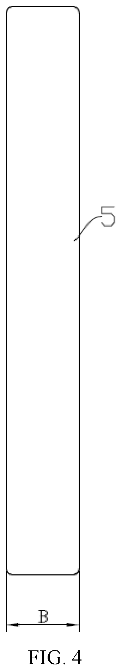

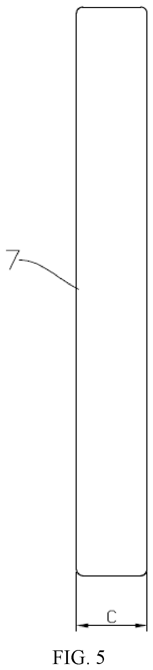

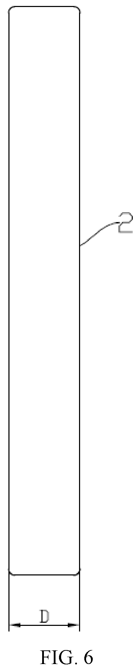

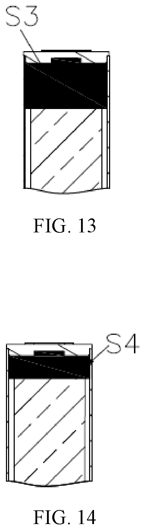

Embodiments of the present application are described below with reference to FIG. 1 to FIG. 14.

According to an embodiment of the present application, there is provided a blade battery, including a housing 1, an electrode assembly 2, a cover plate 3 an insulation support structure, and a stopper 6. The housing 1 has an opening on at least one side; the electrode assembly 2 is disposed inside the housing 1; the cover plate 3 is disposed at the opening on at least one side of the housing 1, where a pressure relief mechanism 4 is provided at the cover plate 3 on a side; and the insulation support structure is disposed between the electrode assembly 2 and the cover plate 3 and includes a lower insulator 5. The stopper 6 is made of a high temperature resistant material and is disposed between the cover plate 3 with the pressure relief mechanism 4 and the electrode assembly 2. When thermal runaway occurs in the blade battery and after the insulation support structure melts, two sides of the stopper 6 facing the electrode assembly 2 and the cover plate 3 are configured to abut and support the electrode assembly 2 and the cover plate 3, respectively; a width of the insulation support structure is denoted by W, a width of the electrode assembly 2 is denoted by D; a cross-sectional area of a gap region enclosed by the insulation support structure, an inner wall of the housing 1, the cover plate 3, and the electrode assembly 2 parallel to a bottom surface 101 of the housing 1 before the insulation support structure melts is denoted by S1; a cross-sectional area of a gap region enclosed by the stopper 6, the inner wall of the housing 1, the cover plate 3, and the electrode assembly 2 parallel to the bottom surface 101 of the housing 1 after the insulation support structure melts is denoted by S2; cross-sectional areas of a region enclosed by the electrode assembly 2, the inner wall of the housing 1 and the cover plate 3 parallel to the bottom surface 101 of the housing 1 before and after the insulation support structure melts are denoted by S3 and S4, respectively; where S1, S2, S3 and S4 satisfy: 8% ≤ S1/S3 ≤ 30%, and 10% ≤ S2/S4 ≤ 80%.

For the blade battery with this structure, when thermal runaway occurs in the blade battery, temperature inside the housing 1 increases quickly, the insulation support structure made of plastic melts under high temperature, the electrode assembly 2 is lack of being supported through the insulation support structure. Pressure at the pressure relief mechanism 4 on a side decreases since the pressure relief mechanism 4 continuously exhausts gas and relieves pressure, while pressure at a side without the pressure relief mechanism 4 in the housing 1 increases, the electrode assembly 2 has a tendency of moving towards a side with the pressure relief mechanism 4 under the action of the pressure difference. Since the high temperature resistant stopper 6 is disposed between the cover plate 3 with the pressure relief mechanism 4 and the electrode assembly 2, the stopper 6 can still support between the cover plate 3 and the electrode assembly 2 under the high temperature to prevent the electrode assembly 2 from moving towards the cover plate 3 and shielding or even blocking the pressure relief mechanism 4 to ensure normal exhaust and pressure relief of the pressure relief mechanism 4. When a distance between an inner surface of the cover plate 3 and the electrode assembly 2 and a size of the housing 1 are fixed, S3 is a fixed value, and S1 and S3 satisfy 8% ≤ S1/S3, S1 is not too small, and there is a gap between the insulation support structure and the inner wall of the housing 1, to facilitate housing insertion of the insulation support structure. At the same time, the gap between the insulation support structure and the inner wall of the housing 1 serves as an airflow channel under normal operation of the battery to ensure that gas can flow through the gap area to the pressure relief mechanism 4. However, when the size of the housing 1 and S3 are fixed and S1 is too large, the distance between the insulation support structure and the inner wall of the housing 1 is too large, and a width of the insulation support structure is too narrow and thus it is unable to provide effectively internal insulation protection for the electrode assembly 2. The electrode assembly 2 is damaged easily when being inserted into the housing. Therefore, S1/S3 ≤ 30% is set to prevent the width of the insulation support structure from being too small to ensure insulation protection effect of the insulation support structure on the electrode assembly 2. After the insulation support structure melts, when the distance between the inner surface of the cover plate 3 and the electrode assembly 2 and the size of the housing 1 are fixed, S4 is a fixed value. The larger S2 is, the larger the exhaust channel and the smaller the size of the stopper 6; the smaller S2 is, the smaller the exhaust channel and the larger the size of the stopper 6. S2 and S4 satisfy 10% ≤ S2/S4 ≤ 80% to prevent exhaust channels from being too small due to S2 being too small, and to effectively ensure the exhaust effect in the event of thermal runaway of the battery. At the same time, the size of the stopper 6 is prevented from being too small due to S2 being too large to ensure strength of the stopper 6 and thus ensure that the stopper can remain stably between the cover plate 3 and the electrode assembly 2 when being squeezed by the electrode assembly 2.

A width of the stopper 6 extending in a width direction of the electrode assembly 2 is denoted by F, where F satisfies 50%×D ≤ F ≤ 95%×W, and/or F ≥ 5mm to prevent the stopper 6 from embedding in the electrode assembly 2 due to the width of the stopper 6 being too small. Simultaneously, an outer contour of the stopper 6 is prevented from protruding from the insulation support structure and causing structural interference during housing insertion due to the stopper 6 being too large to ensure automatic housing insertion and assembly efficiency of the battery.

A length of the stopper 6 extending in a height direction of the electrode assembly 2 is denoted by E, where E satisfies E ≥ 50%×D, and/or E ≥ 5mm to prevent the stopper 6 from structural interference during the housing insertion due to the size of the stopper 6 being too large.

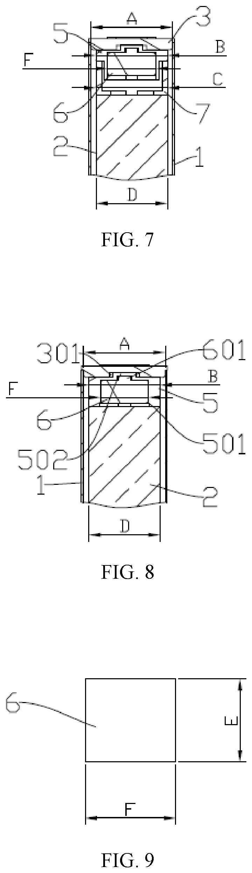

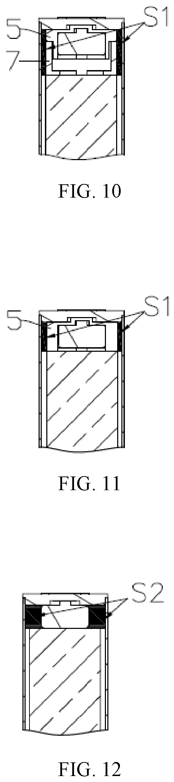

Alternatively, in an embodiment, as shown in FIG. 7 and FIG. 10, the insulation support structure further includes an end plate 7, the lower insulator 5 is disposed at an inner sidewall of the cover plate 3, and the end plate 7 is disposed between the lower insulator 5 and the electrode assembly 2; a width of the lower insulator 5 is denoted by B, a width of the end plate 7 is denoted by C, satisfying 50%×D ≤ F ≤ 95%×B, and/or 50%×D ≤ F ≤ 95%×C. This setting prevents the stopper 6 from embedding into the electrode assembly 2 due to the size of the stopper 6 being too small. At the same time, when the end plate 7 is disposed, the size of the stopper 6 simultaneously satisfies F ≤ 95%B and/or F ≤ 95%C to prevent the stopper 6 from protruding from the lower insulator 5 and/or the end plate 7, prevent occurrence of interference during the housing insertion, and ensure assembly efficiency.

In the present embodiment, as shown in FIG. 7 and FIG. 10, a width of a side of the lower insulator 5 facing the cover plate 3 is greater than a width of a side of the lower insulator 5 facing the electrode assembly 2 to form a flange portion in a transition region. At this time, a width of the lower insulator 5 at a maximum width position is denoted by B. A side of the end plate 7 facing the cover plate 3 abuts against the flange portion, a width of the end plate 7 is the same as the width of the lower insulator 5 at the flange portion, and a side wall of the end plate 7 is flush with a side wall of the flange portion of the lower insulator 5. A cross-sectional area of a gap region enclosed by the end plate 7, a region between a side wall of the flange portion of the lower insulator 5 and the inner wall of the housing 1, the cover plate 3 and the electrode assembly 2 parallel to the bottom surface 101 of the housing 1 is denoted by S1.

As shown in FIG. 8 and FIG. 11, in other embodiments, no end plate 7 may be provided. In this case, widths of both sides of the lower insulator 5 facing both the cover plate 3 and the electrode assembly 2 are the same and a region between a side wall of the lower insulator 5 and the inner wall of the housing 1, the cover plate 3 and the electrode assembly 2 enclose a gap region and a cross-sectional area of the gap region parallel to the bottom surface 101 of the housing 1 is denoted by S1.

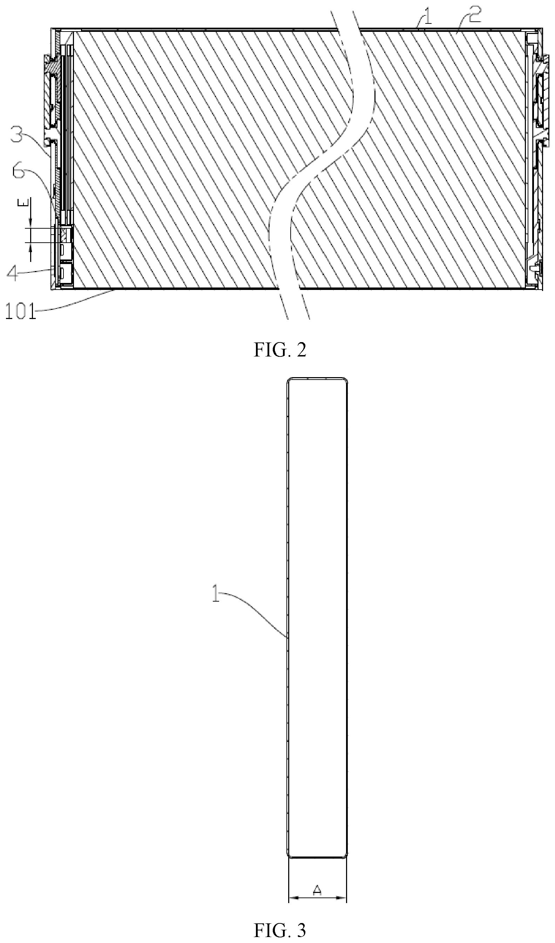

As shown in FIG. 3, a width between inner walls of two large side surfaces of the housing 1 is denoted by A, satisfying 80%×D ≤ W ≤ 95%×A, that is, 80%×D ≤ B ≤ 95%×A, 80%×D ≤ C ≤ 95%×A. It ensures that insulation support structures such as the lower insulator 5 or end plate 7 has sufficient width to provide good insulation protection for the electrode assembly 2, while the lower insulator 5 or end plate 7 is prevented from inconvenient housing insertion due to being too wide.

In case that the inner width A of the housing 1 is 15mm and the width D of the electrode assembly 2 is 13mm, stoppers 6 with different E and F values and batteries with different S1/S3 and S2/S4 values were designed and thermal runaway tests were performed on the blade battery, and the test results are shown in Table 1 and Table 2.

**Table 1**

| | Embodiment 1 | Embodiment 2 | Embodiment 3 | Embodiment 4 | Embodiment 5 | Embodiment 6 | Embodiment 7 | Embodiment 8 | Embodiment 9 | Embodiment 10 |
|---|---|---|---|---|---|---|---|---|---|---|
| A | 15 | 15 | 15 | 15 | 15 | 15 | 15 | 15 | 15 | 15 |
| D | 13 | 13 | 13 | 13 | 13 | 13 | 13 | 13 | 13 | 13 |
| E | 4 | 6.5 | 8 | 8 | 8 | 8 | 8 | 8 | 8 | 8 |
| F | 8 | 8 | 4 | 6.5 | 8 | 8 | 8 | 8 | 8 | 8 |
| S1/S3 | 10% | 10% | 10% | 10% | 5% | 35% | 8% | 30% | 10% | 10% |
| S2/S4 | 15% | 15% | 15% | 15% | 15% | 15% | 15% | 15% | 10% | 20% |
| Test results | The stopper was embedded in the electrode assembly; thermal runaway test failed; and the housing was cracked. | Thermal runaway test passed. | The stopper was embedded in the electrode assembly; thermal runaway test failed; and the housing was cracked. | Thermal runaway test passed. | Assembly interference occurs and housing insertion failed. | Electrode assembly is damaged during assembly | Thermal runaway test passed. | Thermal runaway test passed. | Thermal runaway test passed. | Thermal runaway test passed. |

**Table 2**

| | Embodiment 11 | Embodiment 12 | Embodiment 13 | Embodiment 14 | Embodiment 15 | Embodiment 16 | Embodiment 17 | Embodiment 18 | Embodiment 19 | Embodiment 20 |
|---|---|---|---|---|---|---|---|---|---|---|
| A | 15 | 15 | 15 | 15 | 15 | 15 | 15 | 15 | 15 | 15 |
| D | 13 | 13 | 13 | 13 | 13 | 13 | 13 | 13 | 13 | 13 |
| E | 8 | 8 | 8 | 8 | 8 | 8 | 8 | 8 | 8 | 8 |
| F | 8 | 8 | 8 | 8 | 8 | 8 | 8 | 8 | 8 | 8 |
| S1/S3 | 10% | 10% | 10% | 10% | 10% | 10% | 10% | 10% | 10% | 10% |
| S2/S3 | 30% | 40% | 50% | 60% | 70% | 80% | 85% | 90% | 95% | 9% |
| Test results | Thermal runaway test passed. | Thermal runaway test passed. | Thermal runaway test passed. | Thermal runaway test passed. | Thermal runaway test passed. | Thermal runaway test passed. | Thermal runaway test failed. | Thermal runaway test failed. | Thermal runaway test failed. | Thermal runaway test failed. |

As shown in Embodiment 1 of Table 1, when conditions 50%×D ≤ F ≤ 95%×W, F ≥ 5mm, 8% ≤ S1/S3 ≤ 30%, and 10% ≤ S2/S4 ≤ 80% were satisfied, and when E < 5mm, the stopper 6 is embedded in the electrode assembly 2 during the thermal runaway test due to the length of the stopper 6 being too small, and the thermal runaway test failed. Compared with Embodiment 3 and Embodiment 4 of Table 1, when the conditions E ≥ 50%×D, E ≥ 5mm, 8% ≤ S1/S3 ≤ 30%, and 10% ≤ S2/S4 ≤ 80% were satisfied, and when F < 50%×D, the stopper 6 is embedded in the electrode assembly 2 during the thermal runaway test due to the width of the stopper 6 being too small, and the thermal runaway test failed. As shown in Embodiment 5 and Embodiment 6 of Table 1, when conditions 50%×D ≤ F ≤ 95%×W, F ≥ 5mm, E ≥ 50%×D, E ≥ 5mm, and 10% ≤ S2/S4 ≤ 80% were satisfied, and S1/S3 < 8%, interference occurs during assembly due to gap between the insulation support structure and the inner wall of housing 1 being too small, the electrode assembly 2 failed to insert the housing. When S1/S3 > 30%, the insulation support structure failed to effectively provide internal insulation protection for the electrode assembly 2 due to the insulation support structure being too narrow and the electrode assembly 2 is damaged when being inserted into the housing. As shown in Embodiment 17 to Embodiment 20 of Table 2, when the conditions 50%×D ≤ F ≤ 95%×W, F ≥ 5mm, E ≥ 50%×D, E ≥ 5mm, and 8% ≤ S1/S3 ≤ 30% were satisfied, and S2/S4 > 80%, the thermal runaway test failed since S2 is too large and the stopper is too small; when S2/S4 < 10%, the thermal runaway test failed since the exhaust channel after thermal runaway is too small. As shown in Embodiment 2, Embodiment 4, Embodiment 7 to Embodiment 16, when the conditions 50%×D ≤ F ≤ 95%×W, F ≥ 5mm, E ≥ 50%×D, E ≥ 5mm, 8% ≤ S1/S3 ≤ 30%, and 10% ≤ S2/S4 ≤ 80% were satisfied, the thermal runaway test passed.

When the inner width A of the housing 1 is 30mm and the width D of the electrode assembly 2 is 27mm, stoppers 6 with different E and F values and batteries with different S1/S3 and S2/S4 values were designed and thermal runaway tests were performed on the blade battery, and the test results are shown in Table 3 and Table 4.

**Table 3**

| | Embodiment 21 | Embodiment 22 | Embodiment 23 | Embodiment 24 | Embodiment 25 | Embodiment 26 | Embodiment 27 | Embodiment 28 | Embodiment 29 | Embodiment 30 |
|---|---|---|---|---|---|---|---|---|---|---|
| A | 30 | 30 | 30 | 30 | 30 | 30 | 30 | 30 | 30 | 30 |
| D | 27 | 27 | 27 | 27 | 27 | 27 | 27 | 27 | 27 | 27 |
| E | 6 | 13.5 | 14 | 14 | 14 | 14 | 14 | 14 | 14 | 14 |
| F | 15 | 15 | 7 | 13.5 | 14 | 14 | 14 | 14 | 14 | 14 |
| S1/S3 | 11% | 11% | 10% | 10% | 7% | 33% | 8% | 30% | 8% | 10% |
| S2/S4 | 19% | 19% | 15% | 15% | 17% | 15% | 17% | 15% | 10% | 24% |
| Test results | The stopper was embedde d in the electrode assembly ; thermal runaway test failed; and the housing was cracked. | Thermal runaway test passed. | The stopper was embedded in the electrode assembly ; thermal runaway test failed; and the housing was cracked. | Thermal runaway test passed. | Assembly interference occurs and housing insertion failed. | Electrode assembly is damaged during assembly . | Thermal runaway test passed. | Thermal runaway test passed. | Thermal runaway test passed. | Thermal runaway test passed. |

**Table 4**

| | Embodiment 31 | Embodiment 32 | Embodiment 33 | Embodiment 34 | Embodiment 35 | Embodiment 36 | Embodiment 37 | Embodiment 38 | Embodiment 39 | Embodiment 40 |
|---|---|---|---|---|---|---|---|---|---|---|
| A | 30 | 30 | 30 | 30 | 30 | 30 | 30 | 30 | 30 | 30 |
| D | 27 | 27 | 27 | 27 | 27 | 27 | 27 | 27 | 27 | 27 |
| E | 14 | 14 | 14 | 14 | 14 | 14 | 14 | 14 | 14 | 14 |
| F | 14 | 14 | 14 | 14 | 14 | 14 | 14 | 14 | 14 | 14 |
| S1/S 3 | 10% | 10% | 10% | 10% | 10% | 10% | 10% | 10% | 10% | 10% |
| S2/S4 | 33% | 43% | 53% | 61% | 72% | 80% | 86% | 91% | 95% | 9% |
| Test results | Thermal runaway test passed. | Thermal runaway test passed. | Thermal runaway test passed. | Thermal runaway test passed. | Thermal runaway test passed. | Thermal runaway test passed. | Thermal runaway test failed. | Thermal runaway test failed. | Thermal runaway test failed. | Thermal runaway test failed. |

As shown in Embodiment 21 of Table 3, when conditions 50%×D ≤ F ≤ 95%×W, F ≥ 5mm, 8% ≤ S1/S3 ≤ 30%, and 10% ≤ S2/S4 ≤ 80% were satisfied, and when E < 50%×D, the stopper 6 is embedded in the electrode assembly 2 during the thermal runaway test due to the length of the stopper 6 being too small, and the thermal runaway test failed. Compared with Embodiment 23 and Embodiment 24 of Table 3, when conditions the conditions E ≥ 50%×D, E ≥ 5mm, 8% ≤ S1/S3 ≤ 30%, and 10% ≤ S2/S4 ≤ 80% were satisfied, and when F < 50%×D, the stopper 6 is embedded in the electrode assembly 2 during the thermal runaway test due to the width of the stopper 6 being too small, and the thermal runaway test failed. As shown in Embodiment 25 and Embodiment 26 of Table 3, when conditions 50%×D ≤ F ≤ 95%×W, F ≥ 5mm, E ≥ 50%×D, E ≥ 5mm, and 10% ≤ S2/S4 ≤ 80% were satisfied, and S1/S3 < 8%, interference occurs during assembly due to gap between the insulation support structure and the inner wall of housing 1 being too small, the electrode assembly 2 failed to insert the housing. When S1/S3 > 30%, the insulation support structure failed to effectively provide internal insulation protection for the electrode assembly 2 due to the insulation support structure being too narrow and the electrode assembly 2 is damaged when being inserted into the housing. As shown in Embodiment 37 to Embodiment 40 of Table 4, when the conditions 50%×D ≤ F ≤ 95%×W, F ≥ 5mm, E ≥ 50%×D, E ≥ 5mm, and 8% ≤ S1/S3 ≤ 30% were satisfied, and S2/S4 > 80%, the thermal runaway test failed since S2 is too large and the stopper is too small; when S2/S4 < 10%, the thermal runaway test failed since the exhaust channel after thermal runaway is too small. As shown in Embodiment 22, Embodiment 24, Embodiment 27 to Embodiment 36, when the conditions 50%×D ≤ F ≤ 95%×W, F ≥ 5mm, E ≥ 50%×D, E ≥ 5mm, 8% ≤ S1/S3 ≤ 30%, and 10% ≤ S2/S4 ≤ 80% were satisfied, the thermal runaway test passed.

As shown in FIG. 7, FIG. 8, FIG. 10, and FIG. 11, the insulation support structure is provided with a first groove 501, and the stopper 6 is disposed inside the first groove 501 to easily and quickly fix the stopper 6 on the insulation support structure. After thermal runaway occurs in the battery and the insulation support structure melts, the stopper 6 is located between the cover plate 3 and the electrode assembly 2, the electrode assembly 2 moves to push the stopper 6 and thus the two sides of the stopper 6 abut against the cover plate 3 and the electrode assembly 2, respectively.

In other embodiments, the stopper 6 can also be fixed on the electrode assembly 2, the cover plate 3, or a side plate at the bottom of the housing 1. As long as the stopper 6 is located between the cover plate 3 and the electrode assembly 2, the stopper 6 can support the electrode assembly 2 and prevent the electrode assembly 2 from moving toward the pressure relief mechanism 4 and thus shielding or blocking the pressure relief mechanism 4 after the insulation support structure melts.

As shown in FIG. 7 and FIG. 8, in an embodiment, the first groove 501 is disposed on the lower insulator 5, and the stopper 6 is integrally injection molded with the lower insulator 5. The stopper 6 is easy to manufacture, and no additional process is required in the production of the blade battery. Furthermore, the stopper 6 can be stably held on the lower insulator 5.

In the present embodiment, the first groove 501 is located inside the lower insulator 5, and the stopper 6 is wrapped inside the lower insulator 5.

In other embodiments, the stopper 6 may also be interference-fitted into the first groove 501 or snap-fitted into the first groove 501, and the stopper 6 may also be bonded and fixed inside the first groove 501.

As shown in FIG. 7, FIG. 8, and FIG. 10 to FIG. 12, a side of the cover plate 3 facing the stopper 6 is provided with an embedded portion and a fitted portion respectively. After the lower insulator 5 and the end plate 7 melt, the fitted portion is fitted into the embedded portion to prevent the stopper 6 from moving arbitrarily, the stopper 6 stably supports between the cover plate 3 and the electrode assembly 2 to ensure the smoothness of the exhaust channels, ensure the continuous and effective exhaust and pressure relief of the pressure relief mechanism 4 and improve safety performance of the battery.

Alternatively, the embedded portion is a second groove 301 provided on the cover plate 3, and the fitted portion is a protrusion portion 601 provided on the stopper 6. Correspondingly, the lower insulator 5 is provided with a boss 502 protruding towards the second groove 301. The protrusion portion 601 is accommodated inside the boss 502. Before the lower insulator 5 and the end plate 7 melt, the protrusion portion 601 extends towards the second groove 301 and thus after the lower insulator 5 and the end plate 7 melt, the protrusion portion 601 can be quickly embedded in the second groove 301 when the stopper 6 is squeezed by the electrode assembly 2 to limit the stopper 6, prevent the stopper 6 from moving or deflecting arbitrarily in a height direction of the cover plate 3, and ensure that the stopper 6 stably supports the electrode assembly 2 and the cover plate 3.

It is possible for the stopper 6 to slightly move along a width direction of the cover plate 3 when the stopper 6 is squeezed by the electrode assembly 2. In the present embodiment, the second groove 301 is a waist-shaped groove and extends in the width direction of the cover plate 3. The protrusion portion 601 is cylindrical, and a length of the second groove 301 is greater than a diameter of the protrusion portion 601. Before the lower insulator 5 and the end plate 7 melt, the protrusion portion 601 is located in the middle of the second groove 301. It can be ensured that the protrusion portion 601 is embedded in the second groove 301 since the length of the second groove 301 is greater than the diameter of the protrusion portion 601, even if the stopper 6 moves slightly along the width direction of the cover plate 3.

In other embodiments, the second groove 301 may also be disposed on the stopper 6, and the corresponding protrusion portion 601 is disposed on the cover plate 3.

In an embodiment, the stopper 6 is a rectangular block and widths of the stopper 6 on both sides facing the cover plate 3 and the electrode assembly 2 are equal. When the stopper 6 and the pressure relief mechanism 4 are misaligned, abutting surfaces between the stopper 6 and the cover plate 3 and the electrode assembly 2 are equal in size to stably maintain and support the stopper between the cover plate 3 and the electrode assembly 2, preventing instability due to a contact surface between the stopper 6 and the cover plate 3 or the electrode assembly 2 being too small, and at the same time preventing the stopper 6 from being crushed due to a contact surface on one side being too small.

In an embodiment, the stopper 6 is a solid structure. In other embodiments, the stopper 6 can also be a hollow structure only if the strength of the stopper 6 is ensured. As shown in FIG. 7 and FIG. 8, a cross section of the stopper 6 parallel to the bottom surface 101 of the housing 1 can also be trapezoidal, parallelogram, etc., as long as the stopper 6 has two planes that can abut against the cover plate 3 and the electrode assembly 2.

As shown in FIG. 10 to FIG. 12, the stopper 6 is disposed in the middle of the width direction of the electrode assembly 2. Before and after the lower insulator 5 and end plate 7 melt, the exhaust channels are located on both sides of the stopper 6 in the width direction to ensure uniform and effective exhaust.

Alternatively, the lower insulator 5 includes a lower plastic.

Alternatively, in an embodiment, the pressure relief mechanism 4 is an explosion-proof valve, and the cover plate 3 is further provided with an electrode post.

The stopper 6 is made of aluminum alloy, ceramic, stainless steel or copper, etc. The material of the stopper 6 is also resistant to electrolyte corrosion to enable the stopper to be stably and long-term kept inside the housing 1.

According to an embodiment of the present application, in another aspect, there is further provided a battery module, including any of the blade batteries described above.

In the battery module with this structure, during thermal runaway of the blade battery on the battery module, the stopper 6 can still support between the cover plate 3 and the electrode assembly 2, preventing the electrode assembly 2 from moving towards the cover plate 3 and shielding or even blocking the pressure relief mechanism 4 to ensure the normal exhaust and pressure relief of the pressure relief mechanism 4. The length and width of the stopper 6 satisfy the requirements of 50% ×D ≤ F ≤ 95%×W and E ≥ 5mm, to prevent the stopper 6 from embedding into the electrode assembly 2 due to the length and width of the stopper 6 being too small; further prevent the size of the stopper 6 from being too large to ensuring automatic housing insertion and assembly efficiency of the battery. At the same time, the cross-sectional area satisfies the requirements of 8% ≤ S1/S3 ≤ 30% and 10% ≤ S2/S4 ≤ 80% to facilitate the housing insertion of the insulation support structure, ensure that gas can flow through the gap region to the pressure relief mechanism 4, prevent the width of the insulation support structure from being too narrow, and ensure the insulation protection effect on the electrode assembly 2; prevent the exhaust channel from being too small to effectively ensure the exhaust effect when thermal runaway occurs in the battery, and simultaneously to avoid the stopper 6 being too small to ensure the strength of the stopper 6, and to ensure that the stopper 6 can still be stably maintained between the cover plate 3 and the electrode assembly 2 when being squeezed by the electrode assembly 2 to ensure that the explosion-proof valve can exhaust timely and effectively during occurrence of the thermally runaway, and to ensure the safety of the battery module.

According to an embodiment of the present application, in still another aspect, there is further provided a battery pack, including any of the battery modules described above.

Although embodiments of the present application have been described in conjunction with the accompanying drawings, those skilled in the art can make various modifications and variations without departing from the spirit and scope of the present application, and all such modifications and variations fall within the scope defined by the appended claims.

## Claims

1. A blade battery, comprising:
a housing having an opening on at least one side;
an electrode assembly disposed inside the housing;
a cover plate disposed at the opening on at least one side of the housing, wherein a pressure relief mechanism is provided at the cover plate on a side;
an insulation support structure disposed between the electrode assembly and the cover plate, wherein the insulation support structure comprises a lower insulator; and
a stopper made of a high temperature resistant material; wherein the stopper is disposed between the cover plate with the pressure relief mechanism and the electrode assembly; when thermal runaway occurs in the blade battery and after the insulation support structure melts, two sides of the stopper facing the electrode assembly and the cover plate are adaptable to abut and support the electrode assembly and the cover plate, respectively; a width of the insulation support structure is denoted by W, a width of the electrode assembly is denoted by D; a cross-sectional area of a gap region enclosed by the insulation support structure, an inner wall of the housing, the cover plate, and the electrode assembly parallel to a bottom surface of the housing before the insulation support structure melts is denoted by S1; a cross-sectional area of a gap region enclosed by the stopper, the inner wall of the housing, the cover plate, and the electrode assembly parallel to the bottom surface of the housing after the insulation support structure melts is denoted by S2; cross-sectional areas of a region enclosed by the electrode assembly, the inner wall of the housing and the cover plate parallel to the bottom surface of the housing before and after the insulation support structure melts are denoted by S3 and S4, respectively; wherein S1, S2, S3 and S4 satisfy: 8% ≤ S1/S3 ≤ 30%, and 10% ≤ S2/S4 ≤ 80%.

2. The blade battery of claim 1, wherein a width of the stopper extending in a width direction of the electrode assembly is denoted by F, satisfying 50%×D ≤ F ≤ 95%×W, and/or F ≥ 5mm.

3. The blade battery of claim 1 or 2, wherein a length of the stopper extending in a height direction of the electrode assembly is denoted by E, satisfying E ≥ 50%×D and/or E ≥ 5mm.

4. The blade battery of claim 1 or 2, wherein the insulation support structure further comprises an end plate, the lower insulator is disposed at an inner sidewall of the cover plate, and the end plate is disposed between the lower insulator and the electrode assembly; a width of the lower insulator is denoted by B, a width of the end plate is denoted by C, satisfying 50%×D ≤ F ≤ 95%×B, and/or 50%×D ≤ F ≤ 95%×C.

5. The blade battery of claim 1 or 2, wherein a width between inner walls of two large side surfaces of the housing is denoted by A, satisfying 80%×D ≤ W ≤ 95%×A.

6. The blade battery of claim 1 or 2, wherein the insulation support structure is provided with a first groove, and the stopper is disposed inside the first groove.

7. The blade battery of claim 1 or 2, wherein a side of the cover plate facing the stopper is provided with an embedded portion and a fitted portion respectively; and after the insulation support structure melts, the fitted portion is fitted into the embedded portion to prevent the stopper from moving arbitrarily.

8. The blade battery of claim 1 or 2, wherein the stopper is in a shape of a rectangular block, and /or the stopper is disposed at a middle position of a width direction of the electrode assembly.

9. A battery module, comprising the blade battery of any of claims 1 to 8.

10. A battery pack, comprising the blade module of claim 9.
